# EUROPÄISCHE PATENTANMELDUNG

(11) **EP 1 522 531 A1**
(43) Veröffentlichungstag der Anmeldung: **13.04.2005**
(21) Anmeldenummer: 03022609.6
(22) Anmeldetag: 06.10.2003
(51) Int. Cl.: C03C 13/00

(54) **Feuerschutztüre und Feuerschutzeinlage hierfür**

(71) Anmelder: SAINT-GOBAIN ISOVER G+H AG, 67059 Ludwigshafen (DE)
(72) Erfinder: Keller, Horst, 69259 Wilhelmsfeld (DE); Beyer, Ralph, 67346 Speyer (DE); Bernard, Jean-Luc, 60600 Giencourt Breuil Le Vert (FR); Amannt, Gerald, 60300 Senlis (FR)
(74) Vertreter: GROSSE BOCKHORNI SCHUMACHER

(57) **Zusammenfassung**

Bei einer Feuerschutztüre mit einem umfangseitigen Rahmenwerk und beidseitigen Stahlblechschalen, zwischen denen eine Feuerschutzeinlage aus mindestens einem Dämmelement in Form einer durch ein Bindemittel verfestigten Platte aus in einem physiologischen Milieu löslichen Mineralfasern liegt, weist die Zusammensetzung der Mineralfasern des Dämmelements ein Alkali/Erdalkali-Massenverhältnis von < 1 auf und ist die Faserstruktur des Dämmelements bestimmt durch einen mittleren geometrischen Faserdurchmesser ≤4 µm, eine Rohdichte im Bereich von 60 bis 130 kg/m³ und einen Anteil des Bindemittels, bezogen auf die Fasermasse, im Bereich von 1 bis 3 Gew.-%.

## Beschreibung

Die Erfindung betrifft eine Feuerschutztüre mit den Merkmalen des Oberbegriffs des Anspruchs 1 sowie eine Feuerschutzeinlage hierfür nach dem Oberbegriff des Anspruches 13.

Die Brandschutzanforderungen von Brandschutzelementen sind gemäß DIN 4102, Teil 5 in Feuerwiderstandsklassen klassifiziert. Diese Feuerwiderstandsklassen gelten auch für Feuerschutztüren. Die Feuerwiderstandsfähigkeit einer Feuerschutztüre wird hierbei durch die Zeitdauer bestimmt, bei der bei einem bestimmten Temperaturanstieg an einer Seite der Feuerschutztüre die andere "kalte" Seite der Feuerschutztüre unter einer definierten Grenztemperatur bleibt. Die Zeitdauer in Minuten bis zum Erreichen der Grenztemperatur auf der kalten Seite wird als Standzeit bezeichnet. Diese bestimmt die Einstufung in die verschiedenen Feuerwiderstandklassen. So bedeutet eine Einstufung einer Feuerschutztüre in die Feuerwiderstandsklasse T30 eine mindestens 30-minütige Standzeit bzw. T60 und T90 eine 60-minütige und 90-minütige Standzeit. Während dieser Standzeiten muß sichergestellt sein, dass die raumabschließende Wirkung der Feuerschutztüre gewährleistet ist, d.h. es darf während dieser Zeiten keine Flamme auf der dem Feuer abgewandten Seite aus der Türe austreten, die aus dem Verbrennen der mit einer Feuerschutzeinlage eingetragenen Brandlast, sprich organisches Bindemittel, resultiert.

Infolge der Brandschutzanforderungen, die an Feuerschutztüren gestellt sind, wird als Mineralwoile-Dämmmaterial für die Einlage von Feuerschutztüren überwiegend Steinwolle aufgrund seiner hohen Temperaturbeständigkeit verwendet, deren Schmelzpunkt nach DIN 4102, Teil 17 bei 1.000 °C liegen soll. Derartige Steinwolle wird üblicherweise im sogenannten Düsenblasverfahren oder mit externer Zentrifugierung, beispielsweise dem sogenannten Kaskaden-Schleuderverfahren, hergestellt. Die dabei entstehenden Fasern weisen in der Regel je nach Anwendung einen mittleren geometrischen Durchmesser größer 4 bis 12 µm auf, so dass diese Fasern im Vergleich zu Fasern von herkömmlicher Glaswolle relativ grob sind. Glaswollfasern besitzen dagegen in der Regel je nach Anwendung einen mittleren geometrischen Durchmesser im Bereich von 3 µm bis 6 µm. Bei Steinwolle fällt jedoch aufgrund der Herstellung im Düsenblasverfahren oder mit externer Zentrifugierung zwangsweise ein erheblicher Anteil an unzerfasertem Material an, das in Form sogenannter "Perlen" mit einer Partikelgröße von mindestens 50 µm im Dämmmaterial vorliegt und zwar üblicherweise zu einem Anteil von 10 bis 30 % des Faseranteils des Dämmelements. Dieser vergleichsweise hohe Perlenanteil nimmt zwar am Gewicht des Dämmelements teil, trägt jedoch nichts zur gewünschten Dämmwirkung des Dämmelements bei.

Als Bindemittel wird für Steinwollefasern in der Regel ein Phenol-Formaldehydharz verwendet, welches als organisches Material, als sogenannte Brandlast in die Feuerschutztüre eingebracht wird. Der Gehalt an Bindemittel, welcher für die Strukturstabilisierung des weichen Vlieses aus Steinwolle zur Bildung einer festen Platte aus gebundener Steinwolle erforderlich ist, liegt üblicherweise bei Feuerschützeinlagen etwa kleiner 1 Gew.-% (trocken, bezogen auf die Fasermasse). Aufgrund der vergleichsweise zu herkömmlicher Glaswolle groben Faserstruktur herkömmlicher Steinwolle sind zur Bildung von Feuerschutzeinlagen hohe Rohdichten erforderlich, um die gewünschte Dämmwirkung zu erreichen. Die Rohdichte derartiger Steinwolle-Einlagen beträgt hierbei je nach Feuerwiderstandsklasse zum Beispiel von 120 kg/m³ bis 230 kg/m³.

Derart hohe Rohdichten, die zur Erzielung des gewünschten Dämmeffektes erforderlich sind, führen bei gegebener Dicke von Feuerschutzeinlagen für Feuerschutztüren unmittelbar zu hohen Türgewichten. Ferner hat eine hohe Dichte auch zwangsläufig zur Folge, dass - absolut betrachtet - eine relativ große Bindemittelmenge und damit Brandlast in die Feuerschutztüre eingebracht wird.

Da die Wärmedämmwirkung der Steinwolle-Einlage bei vorgegebener Dicke alleine oftmals nicht ausreicht, um eine geforderte Feuerwiderstandsklasse zu erreichen, müssen häufig zusätzliche Brandschutzmittel vorgesehen werden, die im Brandfalle infolge des damit verbundenen Temperaturanstiegs physikalisch und/oder chemisch gebundenes Wasser abgeben und somit den Temperaturanstieg verlangsamen. Derartige Brandschutzmittel können in einzelnen Lagen eingebracht werden, wie dies aus der EP 0 741 003 bekannt ist, oder aber im Steinwollematerial selbst integriert sein, wie dies etwa aus der EP 1 097 807 bekannt ist.

Die hohen Rohdichten der für Feuerschutzeinlagen verwendeten herkömmlichen Steinwolle-Materialien führen nicht nur zu entsprechend hohen Gewichten der Einlagen und damit auch der Feuerschutztüre, sondern führen weiterhin dazu, dass die Einlagen aufgrund ihrer flächenmäßigen Größe bei ihrer Handhabung etwa im Zuge des Einbringens in die Feuerschutztüre unter ihrem Eigengewicht hohen Biegebelastungen ausgesetzt sind und dazu neigen, beim Anheben zu delaminieren oder gar Risse zu bilden. Deswegen ist eine sehr sorgfältige Handhabung dieser Feuerschutzeinlagen erforderlich, was sich ungünstig in Bezug auf eine rationelle Fertigung auswirkt. Diese mechanische Instabilität der Einlage hat zur Folge, dass der Vorgang des Einbringens der Einlage in den Türkasten bei vielen Feuerschutztüren-Herstellern der einzige Vorgang ist, der noch nicht automatisiert werden konnte.

Produkte mit hoher Rohdichte werden durch eine entsprechende Verdichtung des die jeweiligen Produkte bildenden Vlieses hergestellt. Dabei wird das Vlies vor und während des Durchlaufs durch den Aushärteofen mittels der auf dieses einwirkenden Druckkräfte zur Einstellung einer vorgegebenen Form komprimiert, wobei nach Wegfall der Druckkräfte das ausgehärtete Bindemittel die Formgebung übernimmt. Dabei wirken im Material der Steinwolle ganz erhebliche Rückstellkräfte, die durch die Wirkung des Bindemittels kompensiert werden müssen. Diese Kräfte sind um so höher, je stärker das Material komprimiert wurde, d.h. je höher die Rohdichte ist.

Im Zuge der Alterung des Steinwollematerials nach Einbau der Feuerschutztür können sich jedoch die Bindungskräfte des Bindemittels mit der Zeit abbauen. Dadurch werden die gewissermaßen "eingefrorenen" Rückstellkräfte frei, und die Steinwolle-Einlage kann ausbauchen. Die dabei auftretenden Kräfte können so groß werden, dass sie die Stahlblechschalen der Feuerschutztüre erheblich verformen, so dass die Türe ersetzt werden muss.

Um die Rückstellkräfte etwas besser beherrschen zu können, ist in der Praxis so vorgegangen worden, dass vor dem Aushärteofen eine Druckwalze das unausgehärtete Steinwollematerial lokal unter Druck setzt, und dabei Fasern bricht, d.h. gewalkt wird. Dadurch werden die Rückstellkräfte zwar verringert, was jedoch zur Folge hat, dass der Faserverbund nicht unwesentlich geschädigt werden kann. Auch leidet dadurch die Festigkeit der Einlage, was sich ungünstig bei ihrer Handhabung auswirken kann.

Das Brechen von Fasern mittels der Presswalze kann überdies zu einer erheblichen Staubentwicklung fuhren, so dass Staub und Faserteilchen wie auch Perlen während des Einlegens der Feuerschutzeinlage in den Türkasten diesen verschmutzen können. Diese Verschmutzung kann bei nachfolgenden Schweißvorgängen zum Schließen des Türkastens mit dem Türdeckel zu Fehlstellen bei den Schweißverbindungen führen, so dass aufwendige Qualitätskontrollen und ggf. Nachbearbeitungen erforderlich sind.

Aufgabe der Erfindung ist es, eine Feuerschutztüre gemäß dem Oberbegriff des Anspruchs 1 zu schaffen, welche die Nachteile derartiger Feuerschutztüren auf der Basis herkömmlicher Steinwolle behebt und gewichtsmäßig vergleichsweise leicht ausgebildet ist, wobei die Feuerschutzeinlage insbesondere um mindestens 25 % in ihrem Gewicht reduziert werden soll, ohne dass die Anforderungen an die Brand- und Betriebssicherheit darunter leiden.

Insbesondere soll trotz angestrebter Gewichtsreduzierung die mechanische Stabilität der Feuerschutzeinlagen derart eingestellt sein, um einerseits die Handhabung zu erleichtern und andererseits den Aufbau von Rückstellkräften in Folge alterungsbedingter Verringerung der Bindungskräfte des Bindemittels und damit die Tendenz zum Ausbauchen der Feuerschutztüre zu vermeiden.

Diese Aufgabe wird erfindungsgemäß durch die Merkmale des kennzeichnenden Teils des Anspruches 1 gelöst, wobei zweckmäßige Weiterbildungen der Erfindung durch die Merkmale der Unteransprüche gekennzeichnet sind.

Die erfindungsgemäße Feuerschutztüre zeichnet sich durch eine Feuerschutzeinlage aus mindestens einem Dämmelement aus, bei dem durch das abgestimmte Zusammenwirken mehrerer Faktoren eine für die Maßgabe einer Feuerschutztüre besonders geeignete Faserstruktur definiert und zugleich eine hohe Temperaturbeständigkeit gewährleistet wird. Das erfindungsgemäße Dämmelement weist eine sehr feine Faserstruktur auf, die sich daraus ergibt, dass die Fasern des Dämmelements auf einen mittleren geometrischen Faserdurchmesser ≤4 µm ausgelegt sind. Zugleich liegt die Rohdichte im Bereich von 60 bis 130 kg/m³ und der Anteil des Bindemittels bezogen auf die Masse des Faseranteils des Dämmelements beträgt 1 bis 3 Gew.-%. Durch die fein ausgelegte Mineralfaser mit einem mittleren geometrischen Faserdurchmesser ≤4 µm ergibt sich eine Faserstruktur, bei der bei gleicher Rohdichte wie bei herkömmlichen Steinwollefasern wesentlich mehr Fasern in der Struktur vorhanden sind und damit auch mehr Kreuzungspunkte für den Faserverbund. Bei gleichem Bindemitteleintrag wie bei herkömmlicher Steinwolle reduziert sich aufgrund der größeren Anzahl von Kreuzungspunkten und der Konzentration des Bindemittels an diesen Punkten der nicht zu einer Bindung beitragende Anteil des Bindemittels wesentlich, wodurch ein Faserverbund resultiert, der zu einer vergleichsweise steiferen Auslegung einer ausgehärteten Mineralfaserplatte führt. Aus der geringen Rohdichte von 60 bis 130 kg/m³ ergibt sich somit für die erfindungsgemäße Feuerschutzeinlage bei gleicher Dicke wie herkömmlich unmittelbar eine geringere Fasermasse. Damit kann bei gleichbleibender absoluter organischer Brandlast, d.h. Bindemitteleintrag, dementsprechend ein größerer relativer Bindemittelanteil eingestellt werden, was zur Folge hat, dass die Platte vergleichsweise wesentlich steifer wird. Andererseits kann bei der erfindungsgemäßen Dämmplatte eine vorgegebene Steifigkeit und Stabilität auch mit einem vergleichsweise geringerem absoluten Bindemitteleintrag erreicht werden, wodurch wiederum die durch das zumeist organische Bindemittel eingetragene Brandlast entsprechend reduziert wird. Zugleich erhöht sich in Folge der feinausgelegten Faserstruktur der für die Dämmwirkung wesentliche Luftanteil innerhalb des Dämmelements, was zu einer entsprechenden Erhöhung des Dämmeffekts führt.

Als Folge der Einstellung des Alkali/Erdalkali-Massenverhältnisses auf einen Wert < 1 resultiert eine relativ hohe Temperaturbeständigkeit zur Einhaltung der Anforderungen der normativen Feuerwiderstandsklassen oder dergl. der Mineralfasern des erfindungsgemäßen Dämmelements.

Durch die synergistisch zusammenwirkenden erfindungsgemäßen Maßnahmen ergibt sich somit eine Feuerschutztüre, die sich in Folge der verminderten Rohdichte der Feuerschutzeinlage durch ein geringeres Gewicht bei ausgezeichneten Dämmeigenschaften mit mindestens vergleichbarer Steifigkeit und hoher Temperaturbeständigkeit auszeichnet. Im Prinzip schafft die Erfindung eine Symbiose zwischen Glaswolle und Steinwolle und kombiniert somit geschickt deren vorteilhafte Eigenschaften, in dem das Dämmelement auf eine glaswollartige Faserstruktur ausgelegt ist, jedoch die Vorteile der hohen Temperaturbeständigkeit herkömmlicher Steinwolle aufweist. In Folge der größeren Faserfeinheit kann somit eine bestimmte Dämmwirkung bei gleicher Geometrie mit erheblich geringerer Rohdichte als mit herkömmlicher Steinwolle erzielt werden, was somit zu entsprechenden Materialeinsparungen gegenüber herkömmlichen Feuerschutzeinlagen führt.

Zudem kann bei der Herstellung der Dämmelemente für die Feuerschutztüre mit erheblich geringerer Kompression gearbeitet werden, so dass auch geringere Rückstellkräfte "eingefroren" werden müssen. Kommt es alterungsbedingt zu einem allmählichen Abbau der Bindungskräfte des Bindemittels, so werden im erfindungsgemäßen Faserverbund allenfalls geringe Kräfte freigesetzt, so dass ein Ausbauchen der Feuerschutztüre verhindert und dadurch die Lebensdauer der Feuerschutztüre gegenüber herkömmlichen Feuerschutztüren wesentlich verlängert werden kann.

In Folge der verbesserten Stabilität in Verbund mit der geringeren Rohdichte und dem geringeren Gewicht erleichtert sich auch die Handhabung des Dämmelements zum Zwecke des Zusammenbaus der Feuerschutztüre, da ein Delaminieren, Aufreißen oder gar Abbrechen beim Anheben der Feuerschutzeinlage nicht mehr zu befürchten ist. Speziell der Prozeßschritt des Einlegens einer solchen Feuerschutzeinlage in den Türkasten wird damit auch der Automatisierung zugänglich.

Bei halbierter Rohdichte bedeutet ein gleicher relativer Bindemittelgehalt auch die Halbierung des absoluten Bindemitteleintrags, so dass erfindungsgemäß auch weit weniger Brandlast in die Feuerschutztüre eingetragen wird und damit ein wesentlicher Beitrag zur Erzielung hoher Feuerwiderstandsklassen geleistet wird. Deswegen können erfindungsgemäß Feuerschutzeinlagen mit einem größeren relativen Bindemittelanteil hergestellt werden, da in Folge der feinen Faserstruktur in Verbund mit der geringeren Rohdichte relativ mehr Bindemittel für den Faserverbund zur Verfügung steht bei gleichzeitiger Unterschreitung des absoluten Bindemittelgehaltes der herkömmlichen Steinwolleeinlage und damit die Feuerschutzeinlage mit absolut geringerem Bindemittelanteil entsprechend steif eingestellt werden kann. Mit anderen Worten: Mit der erfindungsgemäßen Feuerschutzeinlage ist es vorteilhaft möglich, ein Produkt zu schaffen, das bei optimierten mechanischen Eigenschaften einen geringeren absoluten Bindemitteleintrag im Vergleich zu herkömmlichen Produkten aufweist. Hierbei eignet sich als Bindemittel ein organisches Bindemittel und liegt der bevorzugte Bereich des Anteils des Bindemittels bezogen auf die Fasermasse des Dämmelements im Bereich von 1 bis 2 Gew.-%.

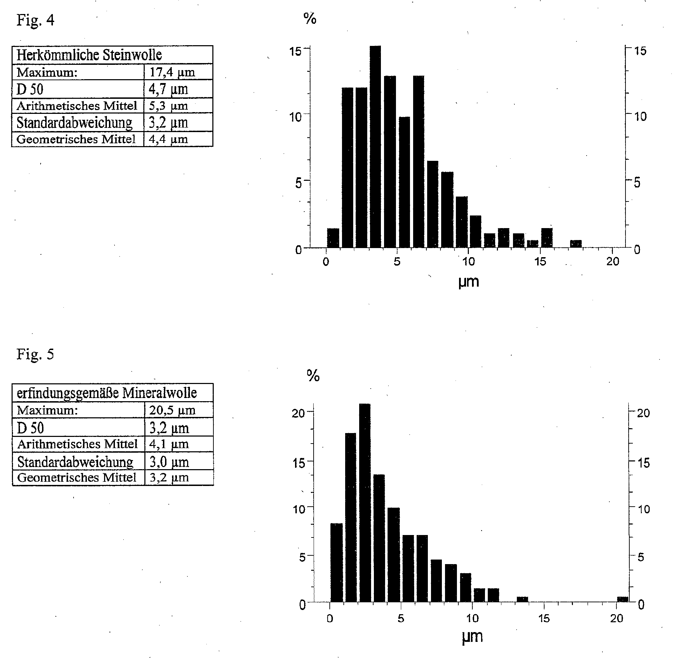

Der für die Faserfeinheit verantwortliche mittlere geometrischen Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 4 und 5). Der bevorzugte Bereich der Rohdichte liegt bei einer Feuerwiderstandsklasse T30 oder dergl. bei 60 bis 80 kg/m³, vorzugsweise 70 kg/m³, bei einer Feuerwiderstandsklasse T60 oder dergl. bei 80 bis 110 kg/m³, vorzugsweise 100 kg/m³, und bei einer Feuerwiderstandsklasse T90 oder dergl. bei 110 bis 130 kg/m³, vorzugsweise 120 kg/m³, was zu entsprechenden, aufgabengemäßen Gewichtsverminderungen der Feuerschutzeinlagen bereits mehr als 30 % führt. Dies sind Rohdichtebereiche, die für Feuerschutzeinlagen aus herkömmlicher Steinwolle unerreichbar sind. Mit Blickpunkt auf die Temperaturbeständigkeit ist es dabei möglich, dass das Dämmelement einen Schmelzpunkt nach DIN 4102, Teil 17 von ≥1.000 °C aufweist.

In besonders geeigneter Weise werden die Mineralfasern des Dämmelements durch eine innere Zentrifugierung im Schleuderkorb-Verfahren mit einer Temperatur am Schleuderkorb von mindestens 1.100 °C hergestellt. Dadurch lassen sich in einfacher Weise Fasern mit entsprechend geringem mittleren geometrische Durchmesser herstellen, wobei die damit erzielte Mineralwolle praktisch perlenfrei ist, was einen weiteren wesentlichen Vorteil gegenüber herkömmlicher Steinwolle mit sich bringt. Faserbruch und damit einhergehende Staubentwicklung sind damit bestmöglich vermieden, so dass sich die erfindungsgemäßen Feuerschutzeinlagen problemlos und störungsfrei in die Türkästen einlegen lassen. Das Verfahren der inneren Zentrifugierung im Schleuderkorb-Verfahren ist für Mineralfasern bereits bekannt, wozu ausdrücklich auf die EP 0 551 476, die EP 0 583 792, die WO 94/04468 und die US 6,284,684 wegen weiterer Einzelheiten verwiesen wird.

In besonders vorteilhafter Weise betragen die Rückstellkräfte gemessen als Druckspannung bei 10% Stauchung nach DIN EN 826 des in die Feuerschutztüre eingebauten Dämmelements bei einer Feuerwiderstandsklasse T30 oder dergl. < 4 kPa, bei einer Feuerwiderstandsklasse T60 oder dergl. < 6 kPa und bei einer Feuerwiderstandsklasse T90 oder dergl. < 8 kPa. Diese geringen Rückstellkräfte tragen, wie oben bereits ausgeführt, zur Verlängerung der Lebensdauer und Vermeidung von Mängeln durch Ausbauchen der Feuerschutztüren bei.

Im erfindungsgemäßen Zusammenhang können im übrigen auch die bekannten Zusatzmaßnahmen verwendet werden, wie die integration von Brandschutzmitteln in der Art von unter Hitze wasserabspaltenden Materialien, wie Metallhydroxide, wobei insbesondere Aluminiumhydroxid verwendet wird. Hierbei ist es zweckmäßig, dass diese im Dämmelement integrierten Brandschutzmittel in mindestens einer diskreten Schicht zwischen den Mineralfasern des Dämmelements angeordnet sind. Diese diskrete Schicht ist hierbei zweckmäßiger Weise eben ausgebildet und parallel zur Hauptoberfläche der in der Regel als Platte vorliegenden Dämmelements angeordnet. Alternativ ist es aber auch möglich, dass die Verteilung des wasserabspaltenden Brandschutzmittels innerhalb der diskreten Schichten streifen und/oder punktförmig erfolgt. Es ist aber auch möglich, dass der wasserabspaltende Stoff homogen im Dämmelement verteilt wird.

Vorteilhaft sind die Feuerschutzeinlagen aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Feuerschutzeinlagen bei Herstellung, Verarbeitung, Nutzung und Entsorgung gewährleistet ist.

Nachfolgend ist in einer Tabelle 1 die bevorzugte Zusammensetzung der Mineralfasern einer erfindungsgemäßen Feuerschutzeinlage bereichsweise in Gew.-% angegeben.

**Tabelle 1**

| | | | |
|---|---|---|---|
| SiO₂ | 39-55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0-3 % | insbesondere | 0-2 % |
| Fe₂O₃ (Eisen gesamt) | 1,5 - 15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

Eine Feuerschutzeinlage mit den oben definierten Merkmalen stellt ein selbständig handelbares Bauteil dar, welches in der Regel vom Mineralfaserhersteller den Feuerschutztür-Herstellern zugeliefert wird. Diese zeichnet sich eben durch die vorbeschriebenen Vorteile mit Blickpunkt auf erhöhte Stabilität, Dämmwirkung und Brandschutzverhalten wie verringertem Gewicht aus.

Nachfolgend werden bevorzugte Ausführungsformen der Erfindung anhand der Zeichnung beschreiben. Darin zeigt
- Fig. 1: eine im Schnitt dargestellte erfindungsgemäße Feuerschutztüre mit erfindungsgemäßer Feuerschutzeinlage sowie
- Fig. 2: eine abgewandelte Ausführungsform einer Feuerschutzeinlage mit zusätzlich integriertem Brandschutzmittel,
- Fig. 3: ein Diagramm eines Vergleichsversuchs im Rahmen einer Wärmeleitfähigkeitsprüfung bei 400°C,
- Fig. 4: ein typisches Faserhistogramm einer herkömmlichen Steinwolle, und
- Fig. 5: ein typisches Faserhistogramm der erfindungsgemäßen Mineralwolle.

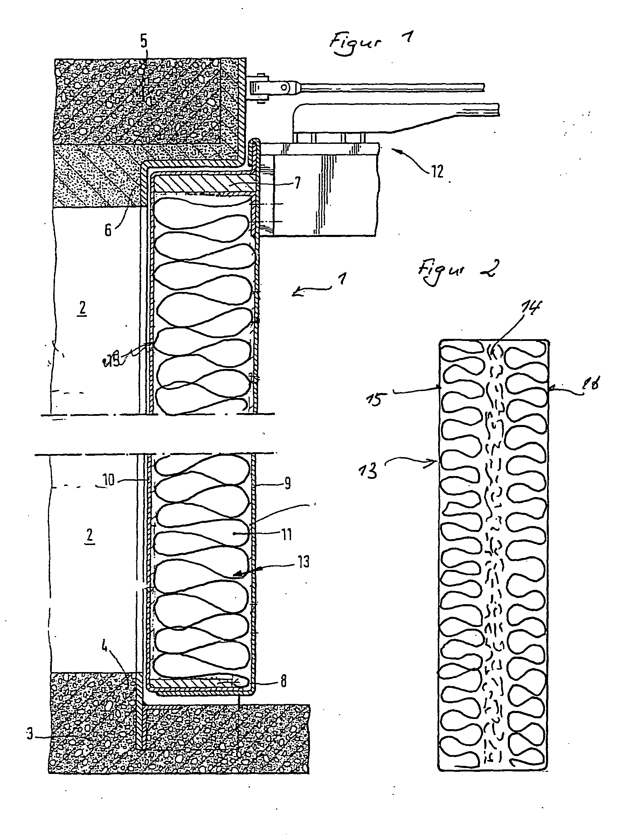

Die in Fig. 1 allgemein mit 1 bezeichnete Feuerschutztüre sitzt in einer Türöffnung des Mauerwerks eines brandgeschützten Raumes 2 mit einem Boden 3 mit unterem Anschlag 4 und einer Decke 5 mit oberem Anschlag 6. Das Rahmenwerk der Feuerschutztüre 1 ist oben bei 7 und unten bei 8 teilweise erkennbar. Ferner sind zwei Stahlblechschalen 9 und 10 vorhanden. Im Inneren des durch die Stahlblechschale 9 und 10 umschlossenen Raumes 11 ist eine erfindungsgemäße Feuerschutzeinlage 13 angeordnet. Bei 12 ist ein nicht den Gegenstand der Erfindung bildender Türschließer schematisch angedeutet.

Die Feuerschutzeinlage 13, die zwischen den Stahlblechschalen 9 und 10 der Feuerschutztüre 1 eingesetzt ist, besteht im Beispielsfalle aus einer Platte aus Mineralwollefasern, deren Zusammensetzung in der rechten Spalte der Tabelle 3 angegeben ist, so dass ein Alkali/Erdalkali-Massenverhältnis < 1 und eine feine Faserstruktur mit einem mittleren geometrischen Durchmesser der Fasern von 3,2 µm vorliegt. Daraus resultiert eine sehr fein ausgelegte Faserstruktur des erfindungsgemäßen Mineralwollgebildes mit einer innigen Vernetzung in Folge der erhöhten Anzahl der Kreuzungspunkte des Faserverbunds.

Fig. 2 zeigt eine weitere Ausführungsform einer Feuerschutzeinlage 13, in welche eine Schicht 14 aus unter Wärmeeinwirkung wasserabspaltendem Stoff eingebaut bzw. integriert ist und zwar in ebener Ausrichtung parallel zu den beiden Hauptflächen 15 und 16 des als Platte ausgebildeten Dämmelements. Als wasserabspaltender Stoff ist hierbei insbesondere Aluminiumhydroxid verwendet. Die Schicht 14 kann hierbei durchgehend, jedoch wahlweise auch streifen und/oder punktförmig vorgesehen sein. Anstelle einer diskreten Schicht 14 können bei Bedarf auch mehrere diskrete Schichten oder der wasserabspaltende Stoff kann auch homogen verteilt vorgesehen sein.

In einem Versuch wurde jeweils eine in eine Feuerschutztüre eingebaute Feuerschutzeinlage aus herkömmlicher Steinwolle und eine Feuerschutzeinlage gemäß der Erfindung einer sogenannten Großbrandprüfung nach DIN 4102, Teil 5 verglichen, mit dem die Einhaltung der Feuerwiderstandsklasse T90 geprüft wurde. Bei identischen Abmessungen beider Feuerschutztüren mit dem Baurichtmaß 1000 mm x 2125 mm und einer Dicke von 65 mm, entsprechend einer Dicke der Feuerschutzeinlage von 63 mm betrug die Rohdichte der konventionellen Feuerschutzeinlage 210 kg/m³ mit einem Bindemittelgehalt von 0,9 Gew.-% mit einem mittleren geometrischen Durchmesser von 4,4 µm und die der erfindungsgemäßen Feuerschutzeinlage 120 kg/m³ mit einem Bindemittelgehalt von 1,5 Gew.-% mit einem mittleren geometrischen Durchmesser von 3,2 µm.

Nach 90 Minuten Versuchsdauer wurde die maximal zulässige Temperaturerhöhung von 180 K auf der dem Brand abgewandten Seite der Feuerschutztüre an keinem nach der Norm DIN 4102, Teil 5 vorgegebenen Messpunkte überschritten. Auch wurde an keiner Stelle ein Flammenaustritt basierend auf einer Verbrennung der organischen Brandlast festgestellt.

Die folgende Tabelle 2 fasst die Messwerte dieses Versuches zusammen, wobei aus der Gesamtheit der Messpunkte diejenigen wiedergegeben sind, die räumlich im oberen kritischen Bereich der Türe an den Stellen der größten Temperaturbelastung angeordnet sind.

**Tabelle 2**

| Messpunkt | erfindungsgemäße Feuerschutzeinlage | herkömmliche Feuerschutzeinlage | Differenz |
|---|---|---|---|
| 6 | 144K | 179K | 35K |
| 12 | 142K | 170K | 28K |
| 13 | 133K | 170K | 37K |
| 14 | 133K | 146K | 13K |
| 15 | 133K | 159K | 26K |

Tabelle 2 zeigt somit, dass zwar beide Konstruktionen die Anforderungen für eine Einstufung in die Feuerwiderstandsklasse T90 erfüllen, wobei dies jedoch im Falle der mit einer erfindungsgemäßen Feuerschutzeinlage versehenen Feuerschutztür mit einem sogar über 40 % leichteren Bauteil im Vergleich zu einer Feuerschutzeinlage aus herkömmlicher Steinwolle erreicht wird.

Wie sich aus den in Tabelle 2 angegebenen Temperaturdifferenzen ferner ergibt, weist die Feuerschutztüre mit der erfindungsgemäßen Feuerschutzeinlage einen deutlich besseren Feuerwiderstand auf, so dass insbesondere noch weiteres Potential zur Gewichtsreduzierung und Materialeinsparung im Vergleich zur konventionellen Feuerschutzeinlage vorhanden ist.

In einem zweiten Versuch wurde eine Feuerschutzeinlage gemäß der Erfindung Brandversuchen unterzogen, nämlich sogenannten Kleinbrandversuchen nach DIN 18089-1, die als Korrelationsprüfungen auf den Ergebnissen von Großbrandprüfungen basieren, und das Ergebnis des Kleinbrandversuchs mit dem Ergebnis einer Kleinbrandprüfung für eine zugelassene Feuerschutzeinlage aus herkömmlicher Steinwolle verglichen, wobei die Einhaltung der Feuerwiderstandsklasse T30 untersucht wurde.

Bei gleichen identischen Außenmaßen von 500 mm x 500 mm und einer Dicke von 52 mm beträgt die Rohdichte der Feuerschutzeinlage aus herkömmlicher Steinwolle 140 kg/m³ mit einem mittleren geometrischen Durchmesser von 4,4 µm und die der erfindungsgemäßen Feuerschutzeinlage 80 kg/m³ mit einem mittleren geometrischen Durchmesser von 3,2 µm. Der Bindemittelgehalt spielt bei dieser Prüfung keine Rolle, da hier durch die Versuchsanordnung lediglich der Wärmedurchgang durch das Produkt als entscheidender Parameter für das Brandverhalten gemessen wird.

Als Grenzwert für die Einhaltung der Kriterien der Feuerwiderstandsklasse T30 setzt die Zulassung für die Feuerschutzeinlage aus herkömmlicher Steinwolle mit den genannten Abmessungen und Dichten fest, dass am Ende der 30-minütigen Versuchszeit kein Einzelwert der mehrfach durchgeführten Versuche eine Temperaturerhöhung von 100 K auf der dem Feuer abgewandten Seite überschreiten darf. Dieser Grenzwert leitet sich aus der maximalen Temperaturerhöhung auf der kalten Seite aus der parallel zu einer erfolgreich bestandenen Großbrandprüfung als Korrelationsprüfung durchgeführten Kleinbrandprüfung ab. Bei gleichen Außenabmessungen betrug hierbei der maximale Temperaturanstieg der erfindungsgemäßen Feuerschutzeinlage nach 30 Minuten vorteilhaft lediglich nur 62 K.

Der Vergleichstest für eine Einstufung in der Feuerwiderstandsklasse T30 zeigt, dass die erfindungsgemäße Feuerschutzeinlage die Grenzwertanforderungen an die zugelassene herkömmliche Feuerschutzeinlage mehr als erfüllt, obwohl mit der erfindungsgemäßen Feuerschutzeinlage ein um ca. 40 % leichteres Element vorlag im Vergleich zur konventionellen Feuerschutzeinlage aus herkömmlicher Steinwolle.

Die große Differenz der erfindungsgemäßen Feuerschutzeinlage von 38 K des maximalen Einzelwertes der Temperaturerhöhung auf der dem Feuer abgewandten Seite eröffnet somit Möglichkeiten für eine weitere Gewichtsreduzierung und/oder Erhöhung des relativen organischen Bindemittelanteils in dem erfindungsgemäßen Brandschutzelement.

Die jeweilige Zusammensetzung in Gew.-% der konventionellen, also aus herkömmlicher Steinwolle gebildeten Feuerschutzeinlage als auch der erfindungsgemäßen Feuerschutzeinlage ergibt sich aus Tabelle 3, wobei beide Feuerschutzeinlagen einen Schmelzpunkt von mindestens 1000°C nach DIN 4102 Teil 17 aufweisen

**Tabelle 3**

| Zusammensetzung | | |
|---|---|---|
| Material | herkömmliche Feuerschutzeinlage | erfindungsgemäße Feuerschutzeinlage |
| SiO₂ | 57,2 | 41,2 |
| Al₂O₃ | 1,7 | 23,7 |
| Fe₂O₃ | 4,1 | 5,6 |
| TiO₂ | 0,3 | 0,7 |
| CaO | 22,8 | 14,4 |
| MgO | 8,5 | 1,5 |
| Na₂O | 4,6 | 5,4 |
| K₂O | 0,8 | 5,2 |
| P₂O₅ | | 0,75 |
| MnO | | 0,6 |
| SrO | | 0,5 |
| BaO | | 0,34 |
| Total | 100 | 99,89 |

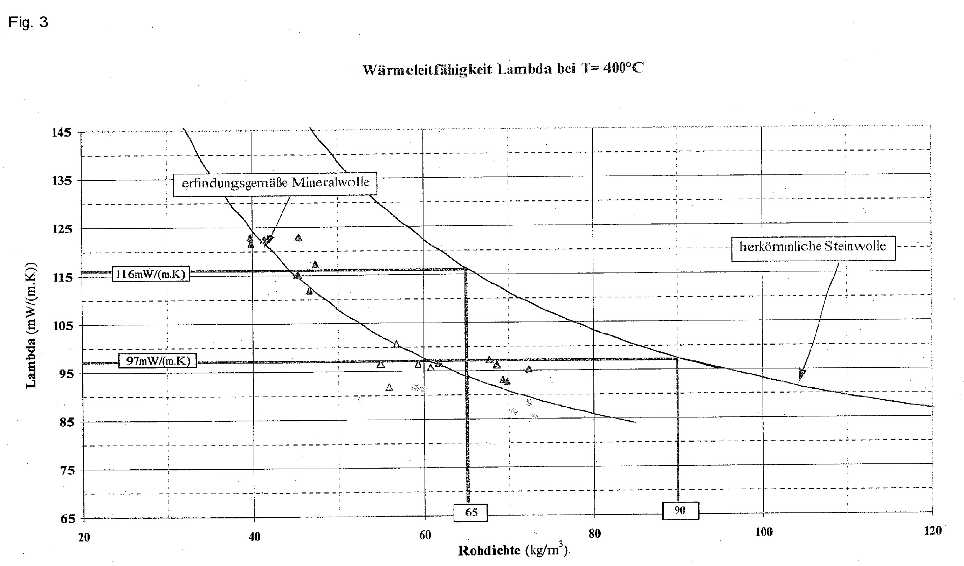

In Fig. 3 ist die Meßreihe eines Wärmeleitfähigkeitsversuches bei 400°C über der Rohdichte in Form eines Diagramms dargestellt. Die Meßergebnisse wurden nach DIN 52612-1 mit einem sogenannten Zweiplattengerät ermittelt.

Aus diesem Diagramm ist in einfacher Weise ersichtlich, welches Einsparpotential in Zusammenhang mit Feuerschutztüren bei Verwendung der erfindungsgemäßen Mineralwolle gegenüber herkömmlicher Steinwolle möglich ist, und zwar beispielhaft für zwei Rohdichten 65 und 90 kg/m³. Die gleiche Wärmeleitfähigkeit von 116 mW/mK, welche bei herkömmlicher Steinwolle mit einer Rohdichte von 65 kg/m³ erreicht wird, wird mit der erfindungsgemäßen Mineralwolle bereits bei einer Rohdichte von etwa 45 kg/m³ erhalten, d.h. mit einer Gewichtseinsparung von ca. 31 %. Analog ergibt sich bei einer Rohdichte von 90 kg/m³ der herkömmlichen Steinwolle durch die erfindungsgemäße Mineralwolle eine Gewichtseinsparung von ca. 33 %.

Schließlich zeigt die Fig. 4 für die in der Beschreibung erwähnte herkömmliche Steinwolle ein typisches Faserhistogramm einer Feuerschutzeinlage, wobei Fig. 5 ein solches der Fasern einer erfindungsgemäßen Feuerschutzeinlage angibt.

## Patentansprüche

1. Feuerschutztüre, die eine normative Feuerwiderstandsklasse oder dergl. aufweist, mit einem umfangseitigen Rahmenwerk und beidseitigen Stahlblechschalen, zwischen denen eine Feuerschutzeinlage mit einer Temperaturbeständigkeit zur Einhaltung der Anforderungen der normativen Feuerwiderstandsklassen oder dergl. eingesetzt ist, welche aus mindestens einem Dämmelement in Form einer durch ein Bindemittel verfestigten Platte aus in einem physiologischen Milieu löslichen Mineralfasern gebildet ist, **dadurch gekennzeichnet, dass** die Zusammensetzung der Mineralfasern des Dämmelements ein Alkali/Erdalkali-Massenverhältnis < 1 aufweist, und dass die Faserstruktur des Dämmelements bestimmt ist durch einen mittleren geometrischen Faserdurchmesser ≤ 4µm, eine Rohdichte im Bereich von 60 bis 130 kg/m³ und einen Anteil des Bindemittels bezogen auf die Masse des Fasergehalts des Dämmelements im Bereich von 1 bis 3 Gew.-%.

2. Feuerschutztüre nach Anspruch 1, **dadurch gekennzeichnet, dass** das Bindemittel ein organisches Bindemittel ist, wie Phenol-Formaldehydharz.

3. Feuerschutztüre nach Anspruch 1 oder 2, **dadurch gekennzeichnet, dass** der Anteil des Bindemittels bezogen auf die Fasermasse des Dämmelements im Bereich von 1 bis 2 Gew.-% liegt.

4. Feuerschutztüre nach einem der vorhergehenden Ansprüche, **dadurch gekennzeichnet, dass** die Rohdichte bei einer Feuerwiderstandsklasse T30 oder dergl. 60 bis 80 kg/m³, vorzugsweise 70 kg/m³, bei einer Feuerwiderstandsklasse T60 oder dergl. 80 bis 110 kg/m³, vorzugsweise 100 kg/m³, und bei einer Feuerwiderstandsklasse T90 oder dergl. 110 bis 130 kg/m³, vorzugsweise 120 kg/m³, beträgt.

5. Feuerschutztüre nach einem der vorhergehenden Ansprüche, **dadurch gekennzeichnet, dass** das Dämmelement einen Schmelzpunkt nach DIN 4102, Teil 17 von ≥ 1.000°C aufweist.

6. Feuerschutztüre nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100°C hergestellt sind.

7. Feuerschutztüre nach einem der vorhergehenden Ansprüche, **dadurch gekennzeichnet, dass** hier die Rückstellkräfte gemessen als Druckspannung bei 10% Stauchung nach DIN EN 826 des in die Feuerschutztüre eingebauten Dämmelements bei einer Feuerwiderstandsklasse T30 oder dergl. < 4 kPa, bei einer Feuerwiderstandsklasse T60 oder dergl. < 6 kPa und bei einer Feuerwiderstandsklasse T90 oder dergl. < 8 kPa sind.

8. Feuerschutztüre nach einem der vorhergehenden Ansprüche, **dadurch gekennzeichnet, dass** im Dämmelement ein unter Wärmeeinwirkung wasserabspaltender Stoff, vorzugsweise Aluminiumhydroxid integriert ist.

9. Feuerschutztüre nach Anspruch 8, **dadurch gekennzeichnet, dass** der wasserabspaltende Stoff in mindestens einer diskreten Schicht integriert zwischen den Mineralfasern des Dämmelements angeordnet ist, wobei die diskrete Schicht vorzugsweise eben ausgebildet und parallel zu den beiden Hauptoberflächen des Dämmelements angeordnet ist.

10. Feuerschutztüre nach Anspruch 8, **dadurch gekennzeichnet, dass** der wasserabspaltende Stoff homogen im Dämmelement verteilt vorliegt.

11. Feuerschutztüre nach einem der vorhergehenden Ansprüche, **dadurch gekennzeichnet, dass** die Mineralfasern des Dämmelements hinsichtlich ihrer Löslichkeit in einem physiologischen Milieu gemäß den Anforderungen der europäischen Richtlinie 97/69/EG und/oder den Anforderungen der deutschen Gefahrstoffverordnung Abs. IV Nr. 22 entsprechen.

12. Feuerschutztüre nach Anspruch 11, **gekennzeichnet durch** folgende Bereiche der chemischen Zusammensetzung der Mineralfasern des Dämmelements in Gew.-%:
| | | | |
|---|---|---|---|
| SiO₂ | 39-55 % | vorzugsweise | 40 - 52 % |
| Al₂O₃ | 16 - 27 % | vorzugsweise | 16 - 26 % |
| CaO | 9,5-20 % | vorzugsweise | 10 - 18 % |
| MgO | 1 - 5 % | vorzugsweise | 1 - 4,9 % |
| Na₂O | 0-15 % | vorzugsweise | 2 - 12 % |
| K₂O | 0-15 % | vorzugsweise | 2 - 12 % |
| R₂O (Na₂O + K₂O) | 10-14,7 % | vorzugsweise | 10 - 13,5 % |
| P₂O₅ | 0 - 3 % | insbesondere | 0 - 2 % |
| Fe₂O₃ (Eisen gesamt) | 1,5 -15 % | insbesondere | 3,2 - 8 % |
| B₂O₃ | 0 - 2 % | vorzugsweise | 0 - 1 % |
| TiO₂ | 0 - 2 % | vorzugsweise | 0,4 - 1 % |
| Sonstiges | 0 - 2,0 % | | |

13. Feuerschutzeinlage für eine Feuerschutztüre nach dem Oberbegriff des Anspruches 1, **gekennzeichnet durch** ein Dämmelement mit den kennzeichnenden Merkmalen wenigstens eines der Ansprüche 1 bis 12.
